# EUROPEAN PATENT SPECIFICATION

(11) **EP 2 581 596 B1**
(45) Date of publication and mention of the grant of the patent: **03.12.2014**
(21) Application number: 12187129.7
(22) Date of filing: 03.10.2012
(51) Int. Cl.: F02M 25/08, F16K 1/44, F16K 31/06

(54) **Low actuating force canister purge valve**
Kanisterspülventil mit geringer Betätigungskraft
Vanne de purge de contenant à faible force d'actionnement

(30) Priority: 03.10.2011 IT BO20110563
(43) Date of publication of application: 17.04.2013
(73) Proprietor: Magneti Marelli S.p.A., Corbetta (MI) (IT)
(72) Inventor: Fornara, Stefano, 41100 MODENA (IT); Lester, Marie, WEST BLOOMFIELD, MI Michigan 48324 (US); Becker, Jeff, MADISON HEIGHTS, MI Michigan 48071 (US)
(74) Representative: Bergadano, Mirko

(56) References cited:
- EP-A1- 0 631 075
- EP-A1- 0 713 036
- US-A1- 2002 088 441
- US-A1- 2005 056 088

## Description

### TECHNICAL FIELD

The present invention relates to a canister purge valve for an internal combustion engine.

The present invention advantageously applies to a canister purge solenoid valve, i.e. an electromagnetically actuated canister purge valve, to which explicit reference will be made in the following description without thereby loosing in generality.

### PRIOR ART

An internal combustion engine is provided with a canister circuit, the function of which is to recover fuel vapors which develop in the fuel tank and to introduce such fuel vapors into the cylinders in order to burn them. This prevents the fuel vapors which develop in the fuel tank from exiting the fuel tank (in particular when the fuel cap is opened for refueling) and from being dispersed freely into the atmosphere.

In a naturally aspirated internal combustion engine (i.e. without supercharging), the canister circuit comprises a recovery pipe which originates in the fuel tank, ends in the intake manifold plenum and is adjusted by a canister purge solenoid valve of the ON/OFF type. Atmospheric pressure is essentially present in the fuel tank, whereas a slight vacuum determined by the aspiration action generated by the cylinders is present in the intake manifold plenum; consequently, when the canister purge solenoid valve is opened, the gasoline vapors are naturally sucked back along the recovery pipe from the fuel tank into the intake manifold plenum.

A canister purge solenoid valve of the ON/OFF type comprises a supply pipe, a valve seat obtained across the supply pipe, and a valve shutter which is movably fitted in the supply pipe in order to be pushed against the valve seat so as to achieve a sealing which prevents the fuel vapors passage. Furthermore, the canister purge solenoid valve of the ON/OFF type comprises a latch spring which presses on the valve shutter to press the valve shutter itself to a closed position (i.e. against the valve seat), and an electromagnetic actuator which, when activated, moves the valve shutter from the closed position to an open position (in which the valve shutter is at a given distance from the valve seat) against the bias of a latch spring.

Recently, internal combustion engine manufacturers are asking for a canister purge solenoid valve which allows to reach high flow rates even in the presence of minor pressure drops caused by the crossing of the canister purge solenoid valve itself. In order to obtain this result, a very large disc-like valve shutter is needed, so that the area of the passage section which is formed between the disc-like valve shutter and the valve seat is large. However, as the size of the disc-like valve shutter increases, there is consequently also an increase in the pneumatic force which acts on the disc-like valve shutter and pushes the disc-like valve shutter itself towards the closed position due to the pressure difference existing upstream and downstream of the disc-like valve shutter when the disc-like valve shutter is closed. Therefore, as the size of the disc-like valve shutter is increased, also the size (and therefore the cost and weight) of the electromagnetic actuator must be increased in order to overcome a pneumatic force which is equally increased.

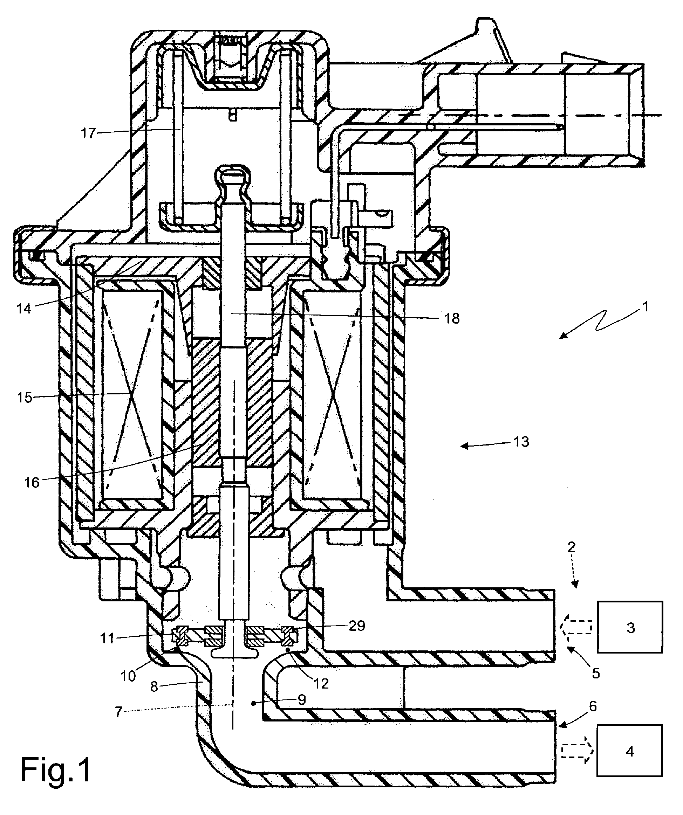

Patent application EP0631075A1 describes a canister purge valve for an internal combustion engine; the canister purge valve comprises:
a housing 1 having a supply channel which connects a fuel vapor inlet port to a fuel vapor outlet port;
a valve seat 3 which is obtained across the supply channel;
a valve shutter 13 which is movably fitted in the supply channel in order to move from an open position (shown in figure 1c), in which the valve shutter 13 is distant from the valve seat 3 and therefore the fuel vapors can flow through a main meatus C2 defined between the valve shutter 13 and the valve seat 3, to a closed position (shown in figure 1a), in which the valve shutter 13 is pressed against the valve seat 3 so as to seal the supply channel and therefore prevent the flow of fuel vapors through the supply channel; and
a rigid stem 8 which is mechanically coupled to the valve shutter 13 in order to move the valve shutter 13 from the open position to the closed position;
wherein the valve shutter 13 has a through pressure compensating channel 18 which is sealed by the stem 8 when the stem 8 itself presses the valve shutter 13 against the valve seat 3 in the closed position (shown in figure 1a); and
wherein the stem 8, during the valve shutter 13 movement from the closed position (shown in figure 1a) to the open position (shown in figure 1c) with respect to the valve seat 3, passes through an intermediate position (shown in figure 1b) in which the valve shutter 13 is still in contact with the valve seat 3 and, at the same time, the pressure compensating channel 18 is open and connects the two sides of the supply channel which are separated by the valve shutter 13.

### DESCRIPTION OF THE INVENTION

It is the object of the present invention to make a canister purge valve which is free from the drawbacks of the prior art and which is, at the same time, easily and cost-effectively producible.

In accordance with the present invention a canister purge valve is made as disclosed in the appended claims.

### BRIEF DESCRIPTION OF THE DRAWINGS

The present invention will now be described with reference to the accompanying drawings, which show a non-limitative embodiment thereof, in which:
- figure 1 is a longitudinal, diagrammatic view of a canister purge solenoid valve made according to the present invention;
- figures 2, 3, 4 are three enlarged scale views of a disc-like valve shutter of the canister purge solenoid valve in figure 1 in three different positions; and
- figures 5 and 6 are two views from the bottom and the top of a disc-like valve shutter of the canister purge solenoid valve in figure 1.

### PREFERRED EMBODIMENTS OF THE INVENTION

In figure 1, numeral 1 indicates a canister purge solenoid valve for an internal combustion engine as a whole. The canister purge solenoid valve 1 is of the ON/OFF type and is adapted to be controlled to either allow or prevent a passage of fuel vapors through a canister circuit 2 which connects a fuel tank 3 to an intake system 4 of the internal combustion engine. In particular, an inlet port 5 of the canister purge solenoid valve 1 communicates with the fuel tank 3, whereas an outlet port 6 of the canister purge solenoid valve 1 communicates with the intake system 4.

The canister purge solenoid valve 1 essentially has a cylindrical symmetry about a longitudinal axis 7 and comprises a housing 8, which has a cylindrical tubular shape with variable section along longitudinal axis 7 and centrally has a supply channel 9 which connects the inlet port 5 to the outlet port 6 and is crossed in use by the fuel vapors.

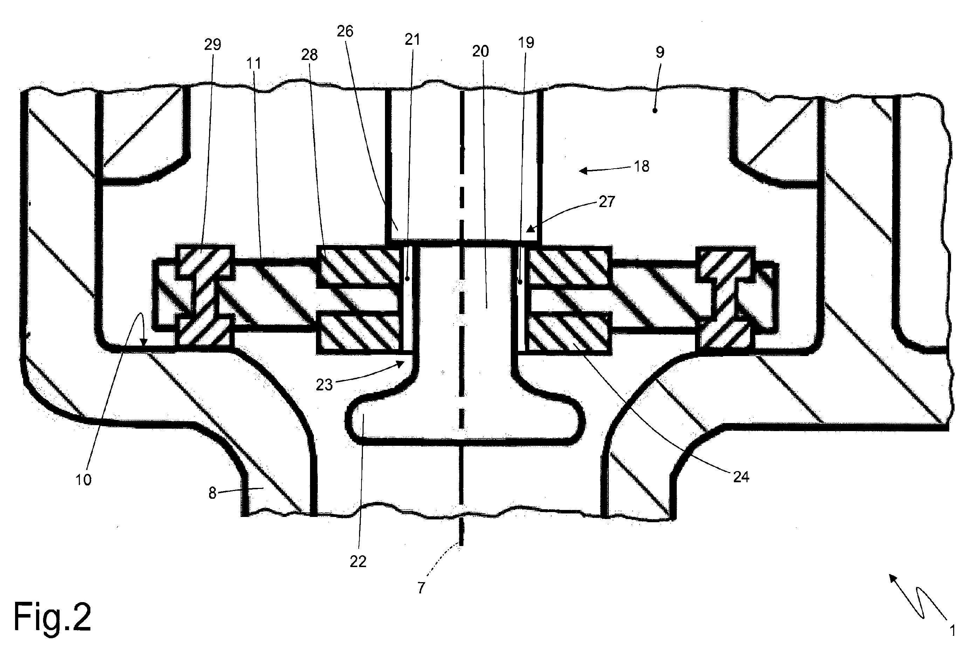

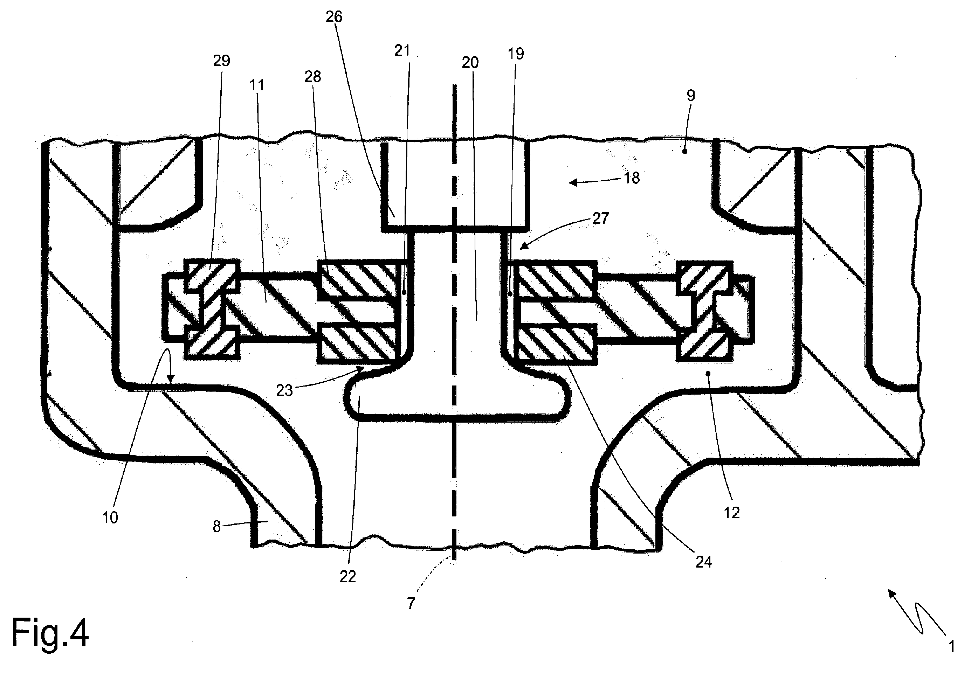

An annular shaped valve seat 10 is obtained across supply channel 9 against which annular shaped valve seat 10 a disc-like valve shutter 11 rests in order to seal the supply channel 9, and thus prevent the fuel vapor flow through the supply channel 9 itself. In particular, the disc-like valve shutter 11 is movably fitted in the housing 8 to axially move from an open position (shown in figures 1 and 4), in which the disc-like valve shutter 11 is axially distant from the valve seat 10 and thus the fuel vapors may flow through a main annular meatus 12 defined between the disc-like valve shutter 11 and the valve seat 10, to a closed position (shown in figure 2), in which the disc-like valve shutter 11 is pressed against the valve seat 10 in order to seal supply channel 9, and thus prevent the fuel vapor flow through the supply channel 9 itself.

An electromagnetic actuator 13 is arranged in the housing 8 and comprises a fixed magnetic armature 14, which is rigidly coupled to the housing 8, a winding 15, which is inserted in the magnetic armature 14, and a mobile keeper 16, which is magnetically coupled to the fixed magnetic armature 14, mechanically integral to the disc-like valve shutter 11, and axially movable in order to move the disc-like valve shutter 11 from the open position (shown in figures 1 and 4) to the closed position (shown in figure 2). A latch spring 17 which pushes the mobile keeper 16 (and thus the disc-like valve shutter 11) towards the closed position (shown in figure 2) acts on the mobile keeper 16 (and thus on the disc-like valve shutter 11 which is mechanically connected to the mobile keeper 16).

The mobile keeper 16 and the latch spring 17 are mechanically connected to the disc-like valve shutter 11 by means of a rigid stem 18 which is developed axially (i.e. parallel to the longitudinal axis 7); in particular, an upper end of the stem 18 is coupled to the latch spring 17, a central portion of the stem 18 is coupled to the mobile keeper 16 and a lower end of the stem 18 is coupled to the disc-like valve shutter 11.

As shown in figures 2-4, the disc-like valve shutter 11 has a through pressure compensating channel 19, which is arranged axially in central position; therefore, the through pressure compensating channel 19 is arranged in the valve seat 10, i.e. the annular valve seat 10 is arranged around the pressure compensating channel 19. The pressure compensating channel 19 connects the two sides of the supply channel 9 separated by the disc-like valve shutter 11 (in other words, the pressure compensating channel 19 connects the side upstream of the valve seat 10 to the side downstream of the valve seat 10), by bypassing, in some moments and as will be explained in greater detail below, the sealing achieved by the contact between the disc-like valve shutter 11 and the valve seat 10 itself.

The stem 18 is arranged through the pressure compensating channel 19, i.e. the stem 18 passes through the pressure compensating channel 19. An intermediate portion 20 of the stem 18 is arranged in the pressure compensating channel 19 and has an external diameter which is smaller than the internal diameter of the pressure compensating channel 19 so as to leave a secondary annular meatus 21 free in the pressure compensating channel 19 through which the fuel vapors may flow, in some moments and as will be explained in greater detail below.

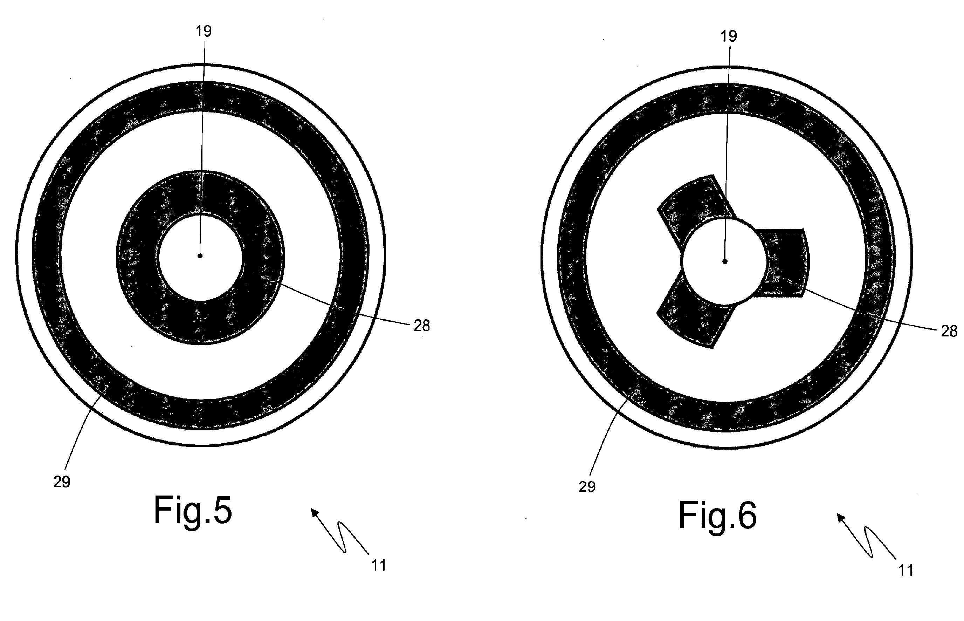

The stem 18 has a bulging bottom portion 22 which inferiorly delimits the intermediate portion 20, is arranged outside the pressure compensating channel 19 and close to the lower opening 23 of the pressure compensating channel 19, and has an external diameter which is larger than the internal diameter of the pressure compensating channel 19 itself. The disc-shaped valve shutter 11 is provided with a lower annular gasket 24, which is arranged around the lower opening 23 of the pressure compensating channel 19 and has three ports 25 (i.e. three missing portions as shown in figure 6) through which the fuel vapors may pass when the bulging bottom portion 22 of the stem 18 rests on the lower gasket 24 itself. In other words, the lower gasket 24 is shaped so as to be "permeable", i.e. so as not seal when the bulging bottom portion 22 of the stem 18 rests on the lower gasket 24 itself; the function of the lower gasket 24 is thus not to achieve a fluid-tight sealing (indeed, by virtue of the ports 25, sealing is completely avoided), but to damp and attenuate the impact of the bulging bottom portion 22 against the disc-like valve shutter 11 in order to considerably reduce the mechanical stress and, above all, the noise generated by this impact.

The stem 18 has a bulging top portion 26 which superiorly delimits the intermediate portion 20, is arranged outside the pressure compensating channel 19 and close to the top opening 27 of the pressure compensating channel 19, and has an external diameter which is larger than the internal diameter of the pressure compensating channel 19. The disc-like valve shutter 11 is provided with an annular upper gasket 28 which is arranged around the top opening 27 of the pressure compensating channel 19 and seals the top opening 27 when the bulging top portion 26 of the stem 18 rests on the upper seal 28 itself. As shown in greater detail in figure 5, the upper gasket 28 is seamless (unlike the upper gasket 24, which has the three ports 25) because the main function of the upper gasket 28 is to ensure the sealing of the contact between the bulging top portion 26 of the stem 18 and the top opening 27 of the pressure compensating channel 18.

The stem 18 is not rigidly integral to the disc-like valve shutter 11 and may thus perform relative movements with respect to the disc-like valve shutter 11 itself. In other words, the stem 18 is not rigidly restrained to the disc-like valve shutter 11 and thus the stem 18 may "reel" with respect to the disc-like valve shutter 11 (or vice versa) within the limits set by the bulging top portion 26 and by the bulging bottom portion 22 of the stem 18 which constitute "stops". In other words, the axial dimension of the intermediate portion 20, i.e. the axial distance existing between the bulging top portion 26 of the stem 18 and the bulging bottom portion 22 of the stem 18, is greater than the thickness (i.e. the axial dimension) of the disc-shaped valve shutter 11 and therefore the disc-shaped valve shutter 11 is mechanically free to move with respect to the stem18 within the limits set by the bulging top portion 26 and by the bulging bottom portion 22 themselves.

According to a preferred embodiment shown in the accompanying drawings, the disc-like valve shutter 11 is provided with an external annular gasket 29 which is arranged at the valve seat 10 and which rests on the valve seat 10 itself when the valve shutter (11) is in the closed position.

The operation of the canister purge solenoid valve 1 described above is described below with particular reference to figures 2, 3 and 4.

When the electromagnetic actuator 13 is off (i.e. not energized), the latch spring 17 axially pushes the stem 18 downwards and the stem 18 presses the disc-like valve shutter 11 against the valve seat 10 keeping the disc-like valve shutter 11 itself in the closed position (shown in figure 2); in this position, the bulging top portion 26 in the stem 18 rests against the portion of the disc-like valve shutter 11 which surrounds the top opening 27 of the pressure compensating channel 19, thus pressing the disc-like valve shutter 11 against the valve seat 10. In this manner (also by virtue of the presence of the external gasket 29 which is fixed to the disc-like valve shutter 11 at the valve seat 10), the disc-like valve shutter 11 seals (i.e. tightly closes) the supply channel 9 and thus prevents the flow of fuel vapors through the supply channel 9.

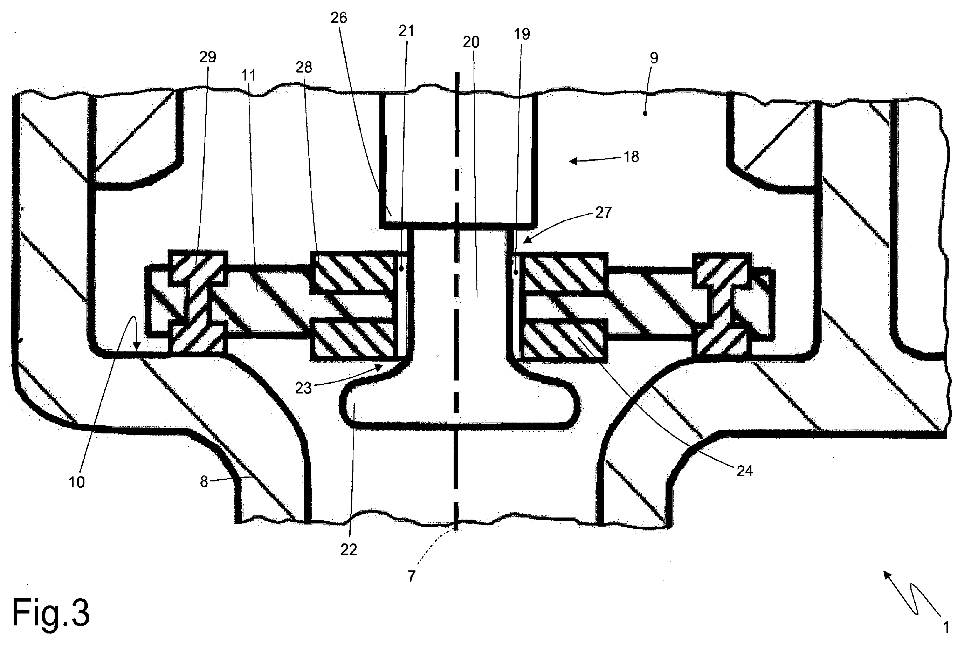

When the electromagnetic actuator 13 is activated (i.e. energized), the magnetic attraction force generated by the electromagnetic actuator 13 directed upwards overcomes the elastic force generated by the latch spring 17 directed downwards, and thus the stem 18 move axially upwards. As shown in figure 3, in the top portion of the upward movement, the stem 18 does not exert any mechanical action on the disc-like valve shutter 11 because in such a first part of the movement the bulging top portion 26 of the stem 18 separates from the portion of the disc-like valve shutter 11 which surrounds the top opening 27 of the pressure compensating channel 19 while the bulging bottom portion 22 of the stem 18 approaches (but still without contact) the portion of the disc-like valve shutter 11 which surrounds the lower opening 23 of the pressure compensating channel 19. Consequently, the stem 18 is in an intermediate position (shown in figure 3), in which the disc-like valve shutter 11 is still in contact with the valve seat 10 and in which both openings 23 and 27 of the pressure compensating channel 19 are (at least partially) free, i.e. they are not completely sealed by the bulging portions 22 and 26 of the stem 18. In this intermediate position (shown in figure 3), the pressure compensating channel 19 is open (i.e. fuel vapors may flow through it) and connects the two sides of the supply channel 9 separated by the disc-like valve shutter 11; therefore, a compensation of the pressure occurs (nearly instantaneously) in this intermediate position (shown in figure 3) in the sides of the supply channel 9 separated by the disc-like valve shutter 11, i.e. the pressures upstream and downstream of the disc-like valve shutter 11 become equal. Thereby, in the intermediate position (shown in figure 3), the pneumatic force which acts on the disc-like valve shutter 11 and is generated by the pressure difference at the two terminals of the disc-like valve shutter 11 is cancelled out.

Subsequently, the upwards movement of the stem 18 brings the bulging bottom portion 22 into contact with the disc-like valve shutter 11 which surrounds the lower opening 23 of the pressure compensating channel 19 (i.e. into contact with the lower gasket 24) and thus the stem 18 starts pulling the disc-like valve shutter 11 axially upwards, thus moving the disc-like valve shutter 11 towards the opening position (shown in figures 1 and 4), wherein the disc-like valve shutter 11 is axially distant from the valve seat 10 and therefore the fuel vapors may flow through the main annular meatus 12 defined between the disc-like valve shutter 11 and the valve seat 10.

The canister purge solenoid valve 1 described above has many advantages.

Firstly, the canister solenoid valve 1 described above has a main annular meatus 12 of considerable size (by virtue of a disc-like valve shutter 11 having a large diameter) and therefore allows to achieve high flow rates despite the low pressure drops caused by the crossing of the canister purge solenoid valve 1 itself.

Furthermore, the canister purge solenoid valve 1 described above allows to use a low performance electromagnetic actuator 13 (consequently of small size, low cost and low weight), because the force applied by the electromagnetic actuator 13 on the disc-like valve shutter 11 (i.e. net of the elastic force generated by the latch spring 17) does not need to overcome a significant pneumatic force: an upstream/downstream pressure difference of the disc-like valve shutter 11 exists only until the stem 18 reaches the intermediate position (shown in figure 3), and in such a part of the movement of the stem 18 the area involved by the movement is very small (a small fraction of the overall area of the disc-like valve shutter 11) and therefore the generated pneumatic force which must be overcome to move the stem 18 which is generated by the pressure difference upstream/downstream of the disc-like valve shutter 11 is in all cases very small (being proportional to the pressure difference and the overall area). When the stem 18 must move the disc-like valve shutter 11 (i.e. after the stem 18 has reached and overcome the intermediate position shown in figure 3), the pressure difference upstream/downstream of the disc-like valve shutter 11 is zero by effect of the previous opening of the pressure compensating channel 19 and therefore there is no pneumatic force acting on the disc-like valve shutter 11.

Finally, the canister purge solenoid valve 1 described above is easily and cost-effectively producible in that it doesn't require any additional actuator or additional component of complex shape with respect to a similar canister purge solenoid valve 1 of the known type.

## Claims

1. A canister purge valve (1) for an internal combustion engine; the canister purge valve (1) comprises:
a housing (8) having a supply channel (9) which connects a fuel vapor inlet port (5) to a fuel vapor outlet port (6);
a valve seat (10) obtained across the supply channel (9);
a movable valve shutter (11) which is assembled within the supply channel (9) and can move from an open position, in which the valve shutter (11) is distant from the valve seat (10) and therefore fuel vapors can flow through a main meatus (12) arranged between the valve shutter (11) and the valve seat (10), and a closed position, in which the valve shutter (11) is pressed against the valve seat (10) so as to seal the supply channel (9) and to prevent fuel vapor flow through the supply channel (9);
a pressure compensating channel (19) which develops along the axial direction and is obtained across the valve shutter (11);
a rigid stem (18) which is not rigidly integral to the valve shutter (11) and therefore can move with respect to the valve shutter (11) and is mechanically coupled to the valve shutter (11) so that it can move the valve shutter (11) from the open position to the closed position;
wherein the rigid stem (18) seals the pressure compensating channel when the rigid stem (18) itself presses the valve shutter (11) against the valve seat (10) into the closed position, and, during the valve shutter (11) movement from the closed position to the open position with respect to the valve seat (10), passes through an intermediate position in which the valve shutter (11) is still in contact with the valve seat (10) and, at the same time, the pressure compensating channel (19) is open and connects the two sides of the supply channel (9) which are separated by the valve shutter (11);
the canister purge valve (1) is **characterized in that** the stem (18) is arranged across the pressure compensating channel (19) and comprises:
an intermediate portion (20) which is arranged across the pressure compensating channel (19) and has an external diameter which is constant and smaller than the internal diameter of the pressure compensating channel (19);
a bulging top portion (26) which superiorly delimits the intermediate portion (20) of the stem, which bulging top portion (26) is arranged outside the pressure compensating channel (19) and close to the top opening (27) of the pressure compensating channel (19), and has an external diameter which is larger than the internal diameter of the pressure compensating channel (19); and
a bulging bottom portion (22) which inferiorly delimits the intermediate portion (20), which bulging bottom portion (22) is arranged outside the pressure compensating channel (19) and close to the lower opening (23) of the pressure compensating channel (19), and has an external diameter which is larger than the internal diameter of the pressure compensating channel (19).

2. A canister purge valve (1) as claimed in claim 1, wherein the valve shutter (11) is provided with an upper gasket (28) arranged around the top opening (27) of the pressure compensating channel (19) and which seals the top opening (27) when the bulging top portion (26) of the stem (18) rests on the upper gasket (28).

3. A canister purge valve (1) as claimed in claim 1 or 2, wherein the valve shutter (11) is provided with a lower gasket (24) which is arranged around the lower opening (23) of the pressure compensating channel (19).

4. A canister purge valve (1) as claimed in claim 3, wherein the lower gasket (24) has at least one port (25) through which the fuel vapors can pass when the bulging bottom portion (22) of the stem (18) rests on the lower gasket (24) itself.

5. A canister purge valve (1) as claimed in any of the claims from 1 to 4, wherein the axial dimension of the intermediate portion (20) is bigger than the axial dimension of the valve shutter (11), leaving therefore the disc-like valve shutter (11) mechanically free to move with respect to the stem (18).

6. A canister purge valve (1) as claimed in any of the claims from 1 to 5, wherein the valve seat (10) has an annular shape and is arranged around the pressure compensating channel (19).

7. A canister purge valve (1) as claimed in claim 6, wherein the valve shutter (11) is provided with an external gasket (29) which is arranged at the valve seat (10) and which rests on the valve seat (10) itself when the valve shutter (11) is in the closed position.

8. A canister purge valve (1) as claimed in any of the claims from 1 to 7, wherein the valve shutter (11) is shaped as a disc.

9. A canister purge valve (1) as claimed in any of the claims from 1 to 8 and comprising an electromagnetic actuator (13) which is mechanically connected to the stem (18), and is activated to move the stem (18) itself from the closed position to the open position.

10. A canister purge valve (1) as claimed in any of the claims from 1 to 9 comprising a latch spring (17) which is mechanically connected to the stem (18) and pushes the stem (18) itself towards the closed position.

## Patentansprüche

1. Kanisterspülventil (1) für einen Verbrennungsmotor; das Kanisterspülventil (10) weist auf:
ein Gehäuse (8) mit einem Versorgungskanal (9), der eine Kraftstoffdampfeinlassöffnung (5) mit einer Kraftstoffauslassöffnung (6) verbindet;
einen Ventilsitz (10), der durch den Versorgungskanal (9) erhalten wird;
einen beweglichen Ventilverschluss (11), der innerhalb des Versorgungskanals (9) montiert ist und sich aus einer offenen Stellung, in der der Ventilverschluss (11) von dem Ventilsitz (10) entfernt ist und somit Kraftstoffdämpfe durch einen zwischen dem Ventilverschluss (11) und dem Ventilsitz (10) angeordneten Hauptdurchgang (12) strömen können, und einer geschlossenen Stellung, in der der Ventilverschluss (11) gegen den Ventilsitz (10) gedrückt wird, sodass er den Versorgungskanal (9) abdichtet und das Strömen von Kraftstoffdämpfen durch den Versorgungskanal (9) verhindert, bewegen kann;
einen Druck ausgleichenden Kanal (19), der entlang der axialen Richtung verläuft und quer über den Ventilverschluss (11) hinweg erhalten wird;
eine starre Spindel (18), die nicht starr ein Stück mit dem Ventilverschluss (11) bildet und sich deshalb in Bezug auf den Ventilverschluss (11) bewegen kann, und mechanisch an den Ventilverschluss (11) gekoppelt ist, sodass sie den Ventilverschluss (11) aus der offenen Stellung in die geschlossene Stellung bewegen kann;
wobei die starre Spindel (18) den Druck ausgleichenden Kanal abdichtet, wenn die starre Spindel (18) selbst den Ventilverschluss (11) gegen den Ventilsitz (10) in die geschlossene Stellung drückt und während der Bewegung des Ventilverschlusses (11) aus der geschlossenen Stellung in die offene Stellung in Bezug auf den Ventilsitz (10) eine Zwischenstellung, in der der Ventilverschluss (11) noch im Kontakt mit dem Ventilsitz (10) ist, durchläuft und gleichzeitig der Druck ausgleichende Kanal (19) offen ist und die zwei Seiten des Versorgungskanals (9), die von dem Ventilverschluss (11) getrennt werden, verbindet;
das Kanisterspülventil (1) ist **dadurch gekennzeichnet, dass** die Spindel (18) quer über dem Druck ausgleichenden Kanal (19) angeordnet ist und aufweist:
einen Zwischenabschnitt (20), der quer über dem Druck ausgleichenden Kanal (19) angeordnet ist und einen Außendurchmesser hat, der konstant und kleiner als der Innendurchmesser des Druck ausgleichenden Kanals (19) ist;
einen sich ausbauchenden oberen Abschnitt (26), der oben den Zwischenabschnitt (20) der Spindel begrenzt, wobei der sich ausbauchende obere Abschnitt (26) außerhalb des Druck ausgleichenden Kanals (19) und nahe der oberen Öffnung (27) des Druck ausgleichenden Kanals (19) angeordnet ist und einen Außendurchmesser hat, der größer als der Innendurchmesser des Druck ausgleichenden Kanals (19) ist; und
einen sich ausbauchenden unteren Abschnitt (22), der unten den Zwischenabschnitt (20) der Spindel begrenzt, wobei der sich ausbauchende untere Abschnitt (22) außerhalb des Druck ausgleichenden Kanals (19) und nahe der unteren Öffnung (23) des Druck ausgleichenden Kanals (19) angeordnet ist und einen Außendurchmesser hat, der größer als der Innendurchmesser des Druck ausgleichenden Kanals (19) ist.

2. Kanisterspülventil (1) nach Anspruch 1, wobei der Ventilverschluss (11) mit einer oberen Dichtung (28) versehen ist, die um die obere Öffnung (27) des Druck ausgleichenden Kanals (19) herum angeordnet ist und die obere Öffnung (27) abdichtet, wenn der sich ausbauchende obere Abschnitt (26) der Spindel (18) auf der oberen Dichtung (28) aufsitzt.

3. Kanisterspülventil (1) nach Anspruch 1 oder 2, wobei der Ventilverschluss (11) mit einer unteren Dichtung (24) versehen ist, die um die untere Öffnung (23) des Druck ausgleichenden Kanals (19) herum angeordnet ist.

4. Kanisterspülventil (1) nach Anspruch 3, wobei die untere Dichtung (24) mindestens eine Öffnung (25) besitzt, durch die die Kraftstoffdämpfe strömen können, wenn der sich ausbauchende untere Abschnitt (22) der Spindel (18) auf der unteren Dichtung (24) selbst aufsitzt.

5. Kanisterspülventil (1) nach einem der Ansprüche 1 bis 4, wobei das axiale Maß des Zwischenabschnitts (20) größer als das axiale Maß des Ventilverschlusses (11) ist, wodurch dem scheibenähnlichen Ventilverschluss (11) mechanische Freiheit bleibt, sich in Bezug auf die Spindel (18) zu bewegen.

6. Kanisterspülventil (1) nach einem der Ansprüche 1 bis 5, wobei der Ventilsitz (10) eine ringartige Form hat und um den Druck ausgleichenden Kanal (19) herum angeordnet ist.

7. Kanisterspülventil (1) nach Anspruch 6, wobei der Ventilverschluss (11) mit einer äußeren Dichtung (29) versehen ist, die an dem Ventilsitz (10) angeordnet ist und auf dem Ventilsitz (10) selbst aufsitzt, wenn der Ventilverschluss (11) in der geschlossenen Stellung ist.

8. Kanisterspülventil (1) nach einem der Ansprüche 1 bis 7, wobei der Ventilverschluss (11) wie eine Scheibe geformt ist.

9. Kanisterspülventil (1) nach einem der Ansprüche 1 bis 8 und einen elektromagnetischen Stellantrieb (13) aufweisend, der mit der Spindel (18) mechanisch verbunden ist und aktiviert wird, um die Spindel (18) selbst aus der geschlossenen Stellung in die offene Stellung zu bewegen.

10. Kanisterspülventil (1) nach einem der Ansprüche 1 bis 9, eine Klinkenfeder (17) aufweisend, die mit der Spindel (18) mechanisch verbunden ist und die Spindel (18) selbst in Richtung der geschlossenen Stellung schiebt.

## Revendications

1. Soupape de purge d'absorbeur (1) pour moteur à combustion interne ; laquelle soupape de purge d'absorbeur (1) comprend :
une enveloppe (8) ayant un canal d'alimentation (9) qui relie un orifice d'admission de vapeur de combustible (5) à un orifice de refoulement de vapeur de combustible (6) ;
un siège de soupape (10) obtenu en travers du canal d'alimentation (9) ;
un clapet de soupape mobile (11) qui est assemblé dans le canal d'alimentation (9) et qui peut se déplacer d'une position ouverte, dans laquelle le clapet de soupape (11) est distant du siège de soupape (10), de sorte que les vapeurs de combustible peuvent s'écouler à travers un méat principal (12) formé entre le clapet de soupape (11) et le siège de soupape (10), et une position fermée, dans laquelle le clapet de soupape (11) est pressé contre le siège de soupape (10) de façon à obturer le canal d'alimentation (9) et à empêcher les vapeurs de combustible de s'écouler à travers le canal d'alimentation (9) ;
un canal de compensation de pression (19) qui s'étend le long de la direction axiale et qui est obtenu en travers du clapet de soupape (11) ;
une tige rigide (18) qui n'est pas attachée de manière rigide au clapet de soupape (11) et qui peut donc se déplacer par rapport au clapet de soupape (11) et qui est mécaniquement couplée au clapet de soupape (11) de telle sorte qu'elle puisse déplacer le clapet de soupape (11) de la position ouverte à la position fermée ;
dans laquelle la tige rigide (18) obture le canal de compensation de pression lorsque la tige rigide (18) elle-même presse le clapet de soupape (11) contre le siège de soupape (10) dans la position fermée, et, pendant le déplacement du clapet de soupape (11) de la position fermée vers la position ouverte par rapport au siège de soupape (10), passe par une position intermédiaire dans laquelle le clapet de soupape (11) est encore en contact avec le siège de soupape (10), et, en même temps, le canal de compensation de pression (19) est ouvert et relie les deux côtés du canal d'alimentation (9) qui sont séparés par le clapet de soupape (11) ;
la soupape de purge d'absorbeur (1) étant **caractérisée en ce que** la tige (18) est disposée en travers du canal de compensation de pression (19) et comprend :
une partie intermédiaire (20) qui est disposée en travers du canal de compensation de pression (19) et qui a un diamètre externe qui est constant et inférieur au diamètre interne du canal de compensation de pression (19) ;
une partie supérieure en renflement (26) qui délimite en partie haute la partie intermédiaire (20) de la tige, laquelle partie supérieure en renflement (26) est disposée à l'extérieur du canal de compensation de pression (19) et à proximité de l'ouverture supérieure (27) du canal de compensation de pression (19), et a un diamètre externe qui est supérieur au diamètre interne du canal de compensation de pression (19) ; et
une partie inférieure en renflement (22) qui délimite en partie basse la partie intermédiaire (20), laquelle partie inférieure en renflement (22) est disposée à l'extérieur du canal de compensation de pression (19) et à proximité de l'ouverture inférieure (23) du canal de compensation de pression (19), et a un diamètre externe qui est supérieur au diamètre interne du canal de compensation de pression (19).

2. Soupape de purge d'absorbeur (1) selon la revendication 1, dans laquelle le clapet de soupape (11) est pourvu d'un joint supérieur (28) disposé autour de l'ouverture supérieure (27) du canal de compensation de pression (19) et qui obture l'ouverture supérieure (27) lorsque la partie supérieure en renflement (26) de la tige (18) repose sur le joint supérieur (28).

3. Soupape de purge d'absorbeur (1) selon la revendication 1 ou 2, dans laquelle le clapet de soupape (11) est pourvu d'un joint inférieur (24) qui est disposé autour de l'ouverture inférieure (23) du canal de compensation de pression (19).

4. Soupape de purge d'absorbeur (1) selon la revendication 3, dans laquelle le joint inférieur (24) a au moins un orifice (25) à travers lequel peuvent passer les vapeurs de combustible lorsque la partie inférieure en renflement (22) de la tige (18) repose sur le joint inférieur (24) lui-même.

5. Soupape de purge d'absorbeur (1) selon l'une quelconque des revendications 1 à 4, dans laquelle la dimension axiale de la partie intermédiaire (20) est plus grande que la dimension axiale du clapet de soupape (11), laissant donc le clapet de soupape en forme de disque (11) mécaniquement libre de se déplacer par rapport à la tige (18).

6. Soupape de purge d'absorbeur (1) selon l'une quelconque des revendications 1 à 5, dans laquelle le siège de soupape (10) a une forme annulaire et est disposé autour du canal de compensation de pression (19).

7. Soupape de purge d'absorbeur (1) selon la revendication 6, dans laquelle le clapet de soupape (11) est pourvu d'un joint externe (29) qui est disposé au niveau du siège de valve (10) et qui repose sur le siège de valve (10) lui-même lorsque le clapet de soupape (11) est en position fermée.

8. Soupape de purge d'absorbeur (1) selon l'une quelconque des revendications 1 à 7, dans laquelle le clapet de soupape (11) a la forme d'un disque.

9. Soupape de purge d'absorbeur (1) selon l'une quelconque des revendications 1 à 8, et comprenant un actuateur électromagnétique (13) qui est mécaniquement relié à la tige (18), et est activé pour déplacer la tige (18) elle-même de la position fermée à la position ouverte.

10. Soupape de purge d'absorbeur (1) selon l'une quelconque des revendications 1 à 9, comprenant un ressort de verrou (17) qui est mécaniquement relié à la tige (18) et qui pousse la tige (18) elle-même vers la position fermée.
